# EUROPEAN PATENT APPLICATION

(11) **EP 1 288 073 A2**
(43) Date of publication of application: **05.03.2003**
(21) Application number: 02425535.8
(22) Date of filing: 28.08.2002
(51) Int. Cl.: B60Q 1/50, B60Q 1/52

(54) **Vehicle having safety lights**

(30) Priority: 28.08.2001 IT RM20010164 U
(71) Applicant: Galasso, Beatrice, 00183 Roma (IT)
(72) Inventor: Galasso, Beatrice, 00183 Roma (IT)
(74) Representative: Leone, Mario

(57) **Abstract**

Vehicle (1), comprising at least one safety light (21; 22; 210; 220), located at the rear thereof and having a shape substantially reproducing a human or animal shape, and operation means (3) of the safety light, controllable from the vehicle inside

## Description

The present invention refers to a vehicle comprising at least one safety light.

Usually, in particular in the absence of traffic lights or of traffic wardens, one or more pedestrians about to cross the roadway signal their intention to the coming vehicles, so as to have the latter stop at the crossing site to let them transit.

However, during said crossing, quite often further vehicles come, the drivers of which cannot see said pedestrians, their view being obstructed by preceding stopped vehicles. Therefore, not grasping the real reason underlying the stopping of the preceding vehicles, said drivers often attempt a side overtaking, risking to run the crossing pedestrians over and, alas, often actually doing so.

It is well known that several car accidents involving pedestrians occur just as abovedescribed.

Alike accidents also occur when in lieu of pedestrians there be animals standing or moving on the roadway.

Hence, there is a demand for technical means preventing the abovedescribed events.

Object of the present invention is to provide a vehicle overcoming the problems abovementioned with reference to the known vehicles.

This problem is solved by a vehicle, characterised in that it comprises:
- at least one safety light, located at the rear thereof and having a shape substantially reproducing a human or animal profile; and
- operation means of said at least one safety light, controllable from the vehicle inside.

In the present context, the term 'vehicle' is meant to indicate any type of vehicle, and in particular cars, lorries, jeeps, vans, coaches, motorcycles, agricultural vehicles like tractors, powered cultivators and the like, etc.

The present invention provides several relevant advantages. The main advantage lies in that the abovementioned one or more safety lights enable drivers to effectively signal to coming vehicles the presence on the roadway of persons or animals, thereby preventing road accidents as those described with reference to the known vehicles.

Other advantages, features and the modes of employ of the present invention will be made apparent from the following detailed description of some embodiments thereof, given by way of a non-limiting example. Reference will be made to the figures of the attached drawings, wherein:
Figure 1 is a perspective view of one embodiment of the vehicle according to the present invention;
Figure 2 is a front view of a detail of the vehicle of Figure 1; and
Figure 3 is a perspective view of a variant embodiment of the vehicle of the invention.

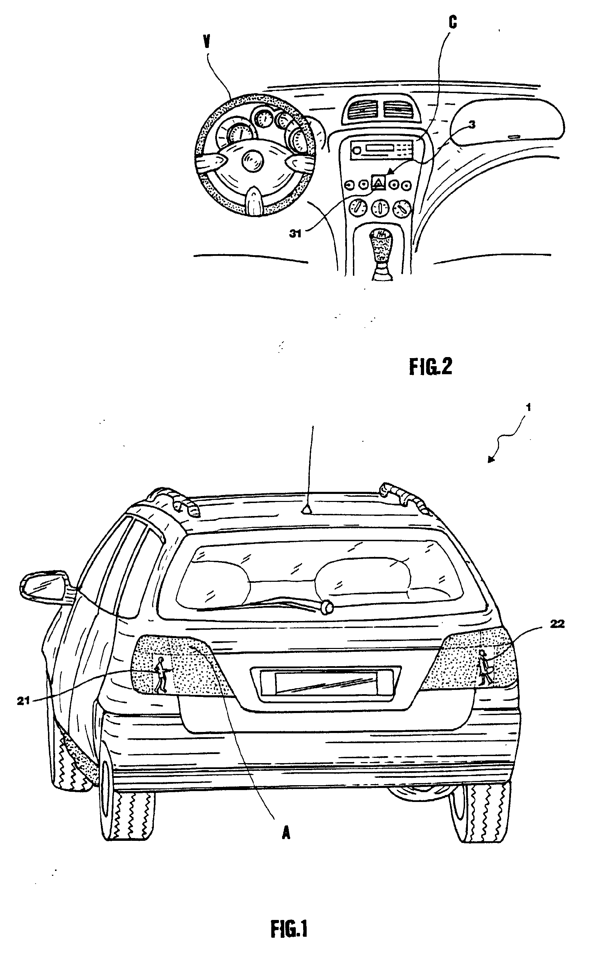

With initial reference to Figure 1, a vehicle according to the invention, in particular a car, is generally indicated with 1.

According to the invention, the car 1 comprises a pair of safety lights, 21 and 22 respectively, located at the rear thereof.

In the present embodiment, the safety lights 21 and 22 are located each at a bottom side section of said rear of the car 1, i.e. at the section where the stop lights, the turn indicator lights, the tail lights, optional fog lights, etc., are usually located. In particular, each light 21, 22 is adjacent to a respective known stoplight A.

Alternatively, the safety lights of the invention can be located each at a side rear pillar of the car.

The lights 21 and 22 have each a substantially anthropomorphic shape, reproducing in particular a male and a female profile, respectively.

A variant embodiment provides that the two lights according to the invention have an identical shape rather than a different one.

In the present embodiment, it is provided that the lights 21 and 22 be substantially blue coloured. This colour was selected since it is different from that of the other lights located at the same section of the vehicle, which usually are red, orange or yellow, so that the safety lights 21 and 22 can more effectively carry out their signalling function.

Moreover, always for a more effective signalling, preferably the safety lights 21 and 22 are of a blinker type.

The car 1 further comprises operation means 3 of the safety lights 21 and 22, controllable from the vehicle inside. In particular, in the present embodiment said means comprises a push button 31 positioned onto the dashboard C and relative connections thereof with the lights 21 and 22 (not shown in the Figures). The positioning onto the dashboard C makes the push button 31 easily pressable also by an occupant of the passenger seat.

Since said push button, related connections and safety lights are implementable with components and techniques well known to a person skilled in the art, a further description thereof will be omitted.

The modes of employ of the invention will hereinafter be made apparent. In particular, the driver of the car 1, upon stopping on the roadway to enable pedestrian transit, presses the push button 31 so as to operate the safety lights 21 and 22, that thus signal to any coming vehicle the reason underlying the stop of the preceding car 1.

It will be understood that the vehicle of the invention is susceptible of several variant embodiments.

First of all, a first variant embodiment provides a single safety light instead of a pair of lights as in the abovedescribed embodiment. This single light can, e.g., be located onto a car trunk, at a top portion thereof, thereby being evident to the coming vehicles.

Furthermore, a second variant provides a different location of the operation push button, that, e.g., can be positioned onto the steering wheel V of the car, thereby being more easily and readily pressable by the driver.

Moreover, according to a third variant the safety lights have a shape substantially reproducing a child shape, thereby enhancing the effectiveness of the signalling function thereof.

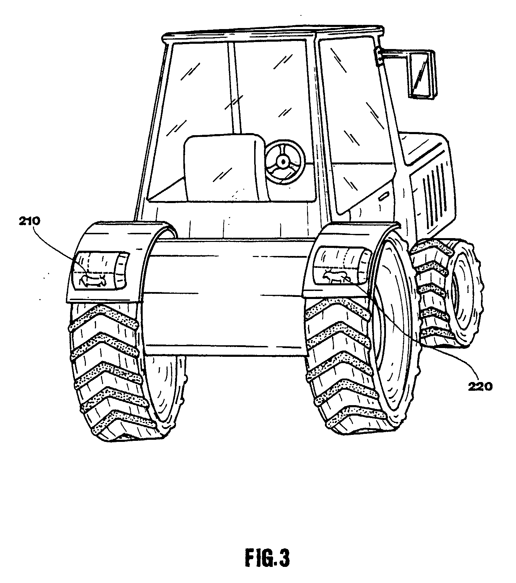

With reference now to Figure 3, according to a fourth variant embodiment two safety lights according to the invention, indicated in this case with 210 and 220, have a shape substantially reproducing an animal shape rather than a human one, e.g. the profile of a sheep, cow, elk, and in general of those animal species likelier to engage the roadway.

It will be understood that the latter variant embodiment is particularly suitable for agricultural vehicles, as it is shown in Figure 3.

The present invention has hereto been described with reference to preferred embodiments thereof. It is understood that there may be other embodiments afferent to the same inventive kernel, all encompassed by the protective scope of the appended claims.

## Claims

1. A vehicle (1), **characterised in that** it comprises:
- at least one safety light (21; 22; 210; 220), located at the rear thereof and having a shape substantially reproducing a human or animal profile; and
- operation means (3) of said at least one safety light, controllable from the vehicle inside.

2. The vehicle (1) according to claim 1, comprising two safety lights (21, 22; 210, 220) having a shape substantially reproducing a human or animal profile, located each at a side portion of said rear.

3. The vehicle (1) according to claim 1 or 2, wherein said at least one safety light (21, 22) has a shape substantially reproducing a child profile.

4. The vehicle (1) according to any one of the preceding claims, wherein said at least one safety light (21, 22) is substantially blue coloured.

5. The vehicle (1) according to any one of the preceding claims, wherein said at least one safety light is a blinker (21, 22).

6. The vehicle (1) according to any one of the preceding claims, wherein said operation means (3) comprises a button (31) positioned onto the dashboard (C) thereof.

7. The vehicle (1) according to any one of the preceding claims, it being an automotive vehicle and wherein said operation means (3) comprises a button (31) positioned onto the steering wheel (V) thereof.

8. The vehicle (1) according to any one of the preceding claims, it being a car.

9. The vehicle (1) according to any one of the preceding claims, it being an agricultural vehicle.
